# EUROPEAN PATENT APPLICATION

(11) **EP 1 410 947 A2**
(43) Date of publication of application: **21.04.2004**
(21) Application number: 03256474.2
(22) Date of filing: 14.10.2003
(51) Int. Cl.: B60P 1/00, B65F 3/00

(54) **Material and waste transportation**

(30) Priority: 14.10.2002 GB 0223867
(71) Applicant: Sumpter, Derek Edward, Shorne, Gravesend DA12 3HG (GB)
(72) Inventor: Sumpter, Derek Edward, Shorne, Gravesend DA12 3HG (GB)
(74) Representative: Bailey, David Martin

(57) **Abstract**

The present invention relates to material and waste transportation, in particular including an improved routine for delivery of newsprint and the removal of waste paper. There is described a trailer for an articulated lorry, the trailer comprising an enclosed elongate material-carrying container adapted for receipt of a flow of material, the container having a walking floor, a rear wall and two side walls and a front access door. The trailer is characterised in that it further comprises a control system including actuating means for the walking floor, the actuating means comprising sensing means adapted to sense when contents within the container reach a predetermined condition and outputting a signal in response thereto. The trailer also comprises powering means causing operation of the walking floor for a predetermined period in response to the signal from said sensing means, to advance the contents towards the rear of the container. There is also described a waste collection system for a premises, the system comprising (i) providing a trailer of the type described; (ii) providing the premises with a waste collection bay including waste material expulsion means for expulsion of waste material into said trailer; the system further comprising means for sensing when the container is full and issuing a signal in response thereto; the system yet further comprising means for calling for an articulated lorry tractor unit to remove the trailer in response to said signal.

## Description

The present invention relates to material and waste transportation, in particular including an improved routine for delivery of newsprint and the removal of waste paper and apparatus for use in such a routine and other situations.

Transportation of goods by road is normally conducted using large articulated lorries having a trailer hauled by a tractor unit. Typically, having delivered its load, the lorry returns to its home depot empty. This is wasteful of driver and vehicle time, being a period of zero productivity, and is also a waste of fuel, thus raising environmental concerns. The government is keen to encourage hauliers to use full trailers on the return leg of each journey. However, whilst being an admirable aim, it is, in practice, difficult to achieve, for several reasons. Products made by the concern to whom the delivery was made may not require transportation of its own goods in the direction of the lorry's home depot. Furthermore, trailers may be designed specifically for transporting a certain type of product and are not readily adaptable to carrying other goods.

In the newsprint industry, reels of newsprint are typically delivered to a printing works on a trailer with fabric side curtains carried upon a steel frame, typically known as a "Tautliner". Printing works produce a great deal of waste paper. Typically, on a continuous basis as it is produced, a compactor unit compresses waste paper into a 20 foot long bin. Typically, two bins are transported for disposal or recycling upon a single trailer. The trailer will be different from that used to deliver the newsprint. Typically, approximately six of these bins are required to contain the waste generated at a newspaper printing works from processing the newsprint of a single delivery of a typical 13m trailer. Each bin in turn must be mounted upon and demounted from the trailer using a hook lift vehicle before the contents can be disposed of. The system is generally similar to that in our copending application GB 2 307 895A. This procedure is unduly time consuming involving many movements of bins. This additionally produces a considerable amount of noise.

It is with these problems in mind, particularly with reference to the newsprint industry, that the present invention has been devised.

Our earlier application EP-A-1061012 already considers this problem and describes a material delivery and waste collection system for a premises; the system comprising (i) providing at least two, wheeled, enclosed elongate material-carrying containers each having a floor, walls, a roof and an access door mounted within a frame at the rear of the container; (ii) providing the premises with a delivery bay for transfer of materials from the rear of a first container into the premises; and (iii) providing the premises with at least one waste collection bay; wherein the waste collection bay includes a compactor unit having an input adapted to receive waste material and an output for expulsion of the waste material; the system comprising mutually cooperating connecting means provided on the compactor units and on the rear of the second container; the connecting means providing a substantially rigid connection between the output of the compactor unit and the container. Preferably, the wheeled container is in the form of a trailer of an articulated lorry.

EP-A-1061012 also describes a trailer for an articulated lorry adapted for use in the system described above. The trailer comprises an enclosed elongate material-carrying container having a floor, walls, a roof and an access door mounted within a frame at the rear of the trailer; wherein the interior surfaces of the walls and roof are substantially flat and uninterrupted and the floor includes a plurality of longitudinally extending guide tracks; wherein further, the rear of the trailer comprises cooperative means for connecting the trailer to the output of a compactor unit. The trailer further comprises means for discharging waste material from the interior of the container. Typically, the container is mounted at the rear of the trailer upon a chassis for pivotal movement with respect thereto. Alternatively, the container may include a tipping ram to tilt the trailer thereby discharging the contents. Preferably, the access door is a vertically slidable door and the frame is itself in the form of an outwardly opening door.

Further development work has led to further improvements which yet further increase the versatility of these trailers.

Accordingly, the present invention provides a trailer for an articulated lorry. The trailer comprises an enclosed elongate material-carrying container adapted for receipt of a flow of material, the container having a walking floor, a rear wall and two side walls and a front access door. The trailer is characterised in that it further comprises a control system including actuating means for the walking floor. The actuating means comprises sensing means sensing when contents within the container reach a predetermined condition and outputting a signal in response thereto, and powering means causing operation of the walking floor for a predetermined period in response to the signal from said sensing means, to advance the contents towards the rear of the container.

Typically, the powering means comprises an electrically powered pump, suitably a hydraulic or pneumatic pump.

Typically, the predetermined period of operation of the walking floor is dependent upon the nature of the contents of the container and is suitably controlled by means of a computer.

Preferably, the trailer further includes an internal moveable wall or headboard which is advanceable between a position adjacent the access door in which the capacity of the container is at a minimum and a position remote the access door in which the capacity of the container is at a maximum.

Preferably, the interior surfaces of the walls and roof are substantially flat and un-interrupted.

Preferably, a sheet, typically of canvas, is attached to the bottom edge of the headboard. The trailer further comprises means for discharging waste material from the interior of the container. Typically such means comprises mounting the container for pivotal movement about an axis adjacent the front doors of the trailer and includes means for elevating the rear end of the container thereby tipping the container.

Typically, preferably, the trailer includes a door, suitably a sliding door, in the roof of the vehicle.

The term walking floor, when used herein, means a floor comprising a plurality of parallel longitudinal floor elements or slats arranged to reciprocate so as to produce a walking effect, whereby an article placed upon the floor is caused to advance in a chosen direction. Such arrangements are well known in the field of trailers. A vehicle having such a walking floor is described in US 5551824, to which further reference should be made. The term is also intended to cover other arrangements which produce this effect. Examples of alternative arrangements are shown in EP 0081695, US 3998343 and US 4747747 to which further reference should also be made. These publications also describe the use of moveable walls or headboards.

In a second aspect, the present invention provides a waste collection system for a premises, the system comprising (i) providing a trailer of the type described above; (ii) providing the premises with a waste collection bay including means for expulsion of waste material into said trailer; the system further comprising means for sensing when the container is full and issuing a signal in response thereto; the system yet further comprising means for calling for an articulated lorry tractor unit to remove the trailer in response to said signal.

The above and other aspects of the present invention will now be described in further detail by way of example only with reference to the accompanying drawings, in which:
- Figure 1: is a rear view of a trailer in accordance with the present invention;
- Figure 2: is a side view of an embodiment of a trailer in accordance with the present invention;
- Figure 3: is a part cut-away side view of the embodiment of Figure 2;
- Figure 4: is a part cut-away plan view of the trailer of Figure 3;
- Figure 5: is a schematic plan view illustrative of the process of the present invention;
- Figure 6: illustrates schematically the features of the control system;
- Figure 7: shows in 6 side views, the application of the process of the present invention to a trailer of the present invention;
- Figure 8: is a schematic cross-sectional view of an alternative arrangement of an apparatus in accordance with the present invention, in use with a container containing a material;
- Figure 9: is a schematic perspective view of the embodiment of Figure 8; and
- Figure 10: is schematic cross-sectional view of a modification of the embodiment of Figure 8.

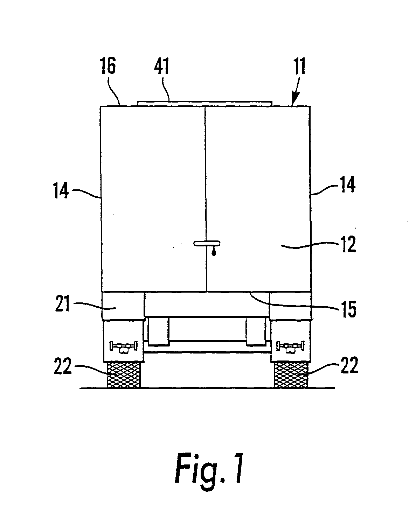

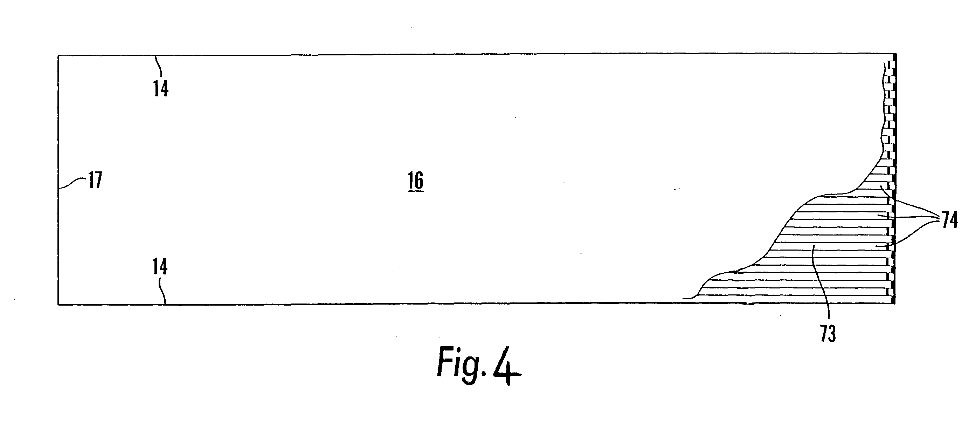

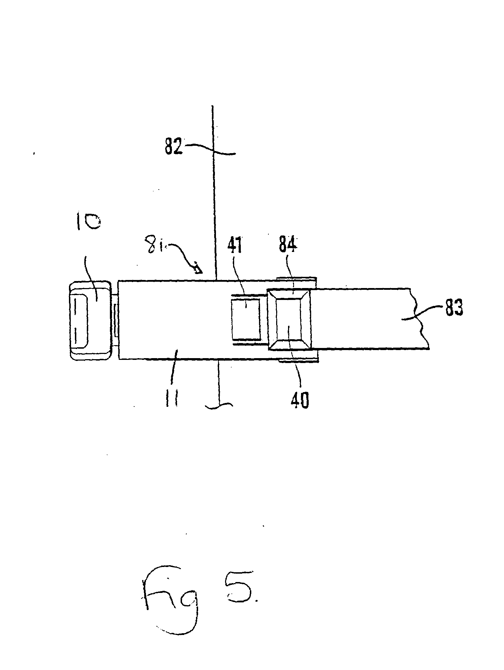

With reference to Figures 1 to 4, the trailer, shown generally at 11, for a lorry tractor unit 10 (Figure 5) will be explained. Firstly, it will be helpful to define that in the context of trailers, the terms 'front' and 'rear' are with respect to the conventional access doors 12, which are taken to be at the front of the trailer. The trailer 11 comprises a container 13 defined by two side walls 14, floor 15, roof 16, rear wall 17 and the front doors 12.

Many features of the trailer 11 are largely conventional and do not need to be described in further detail. Indeed, this is a particular advantage of the present system and trailer. The container 13 is mounted for pivotal movement about an axial horizontal axis 20 upon a chassis 21. Chassis 21 includes additional conventional trailer components such as three pairs of road wheels 22 and front 23 and rear 24 support legs for use when the trailer is not coupled to a tractor unit. Pivotal movement is actuated by means of a pneumatic or hydraulic piston 25, generally vertically mounted but adapted to pivot as required during extension thereof and thus pivoting of the container 13.

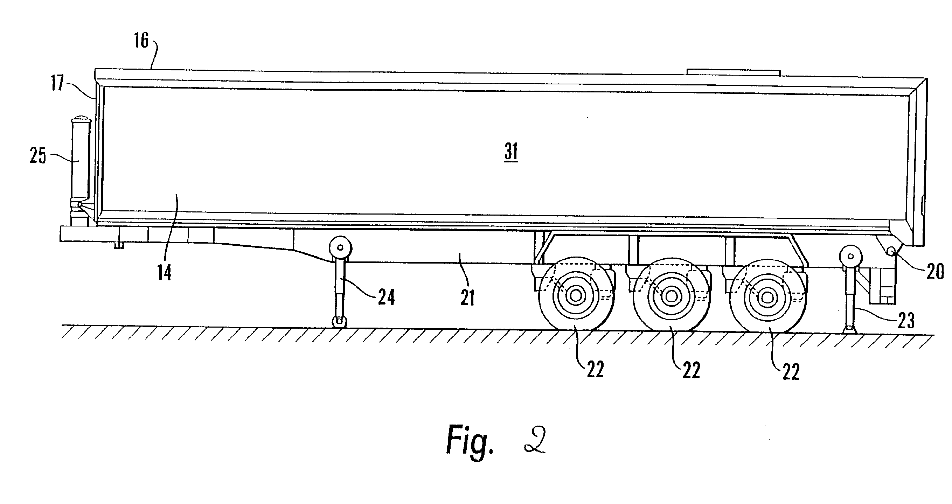

One embodiment of a container 13 is shown in Figure 2 and is typically formed from 5mm aluminium alloy plate and is clad externally with an appropriate sheet material 31. The use of aluminium means that the container is equally suitable for the transportation of grain/cereals. Indeed the inventive system will find use in the delivery of products to, for example, supermarkets. Supermarkets produce a large quantity of paper and cardboard waste which is presently compacted into small containers in the same manner as in the waste newsprint industry. In this regard, it will be apparent that the trailer could also be refrigerated.

Typically, the container 13 is around 13m long, 2.55m wide and 2.5m tall.

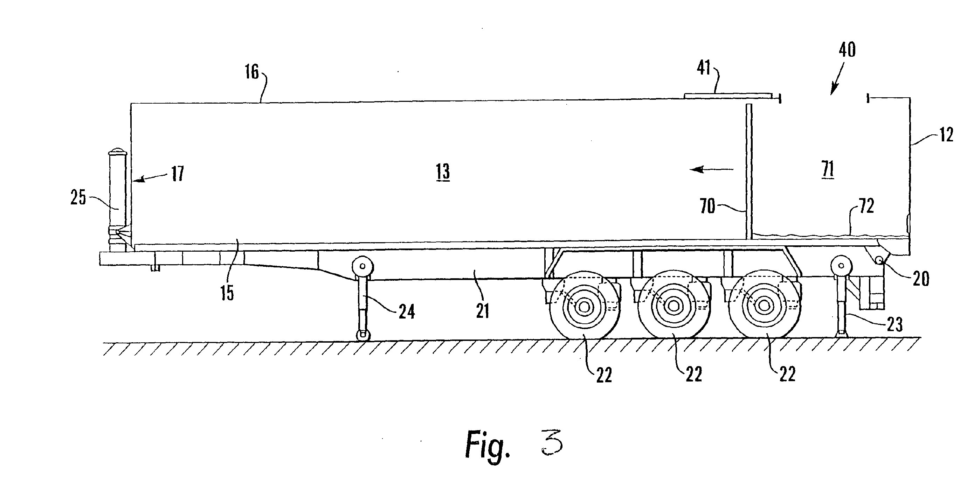

As is most clearly seen from Figure 3, the roof 16 of the trailer includes a hatch comprising an aperture 40 coverable by a horizontally sliding cover 41. Further details of trailers of this type can be found in our earlier patent application, EP 1120363A.

Within the trailer is transverse wall or headboard 70 (Figure 3) which is arranged by suitable means to be advanceable towards the rear wall 17 of the trailer in the direction shown by the arrow in Figure 3. The headboard 70 divides the container 13 to form a cavity 71 with the of the trailer (namely with the doors 12). Attached to the headboard 70 at its lower edge is a strong canvas sheet 72. The canvas sheet 72 is dimensioned such that when the headboard 70 is in its initial position just rearward of the aperture 40 (as shown in Figure 3), the canvas extends from the headboard to the doors 12 of the trailer. Thus the area of the canvas sheet 72 corresponds with the initial floor area of the cavity 71.

The floor of the trailer is provided with a walking floor 73 of the type described above. The walking floor comprises a series of parallel longitudinal slats 74. The slats 74 are arranged to move back and forth with a reciprocating motion, alternate slats 74 moving in opposite directions. Such floors are well known in the art and will not be described in any further detail.

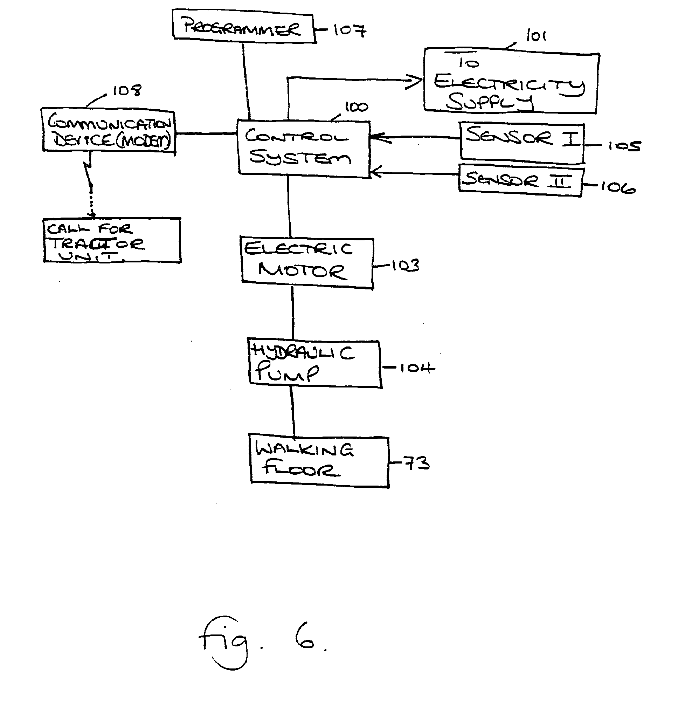

The present invention relates primarily to the provision of an on-board control system. Referring to Figure 6, the control system 100 includes connection means for connecting to an electricity supply 102 at the user's site, powering a motor 103 driving a hydraulic pump 104 which, in turn, actuates the walking floor 73. The system includes a plurality of sensors 105, 106 within the container of the trailer to monitor the filling condition of the container. The sensors are mounted at various points in the upper regions of the container and will be described further below. In response to a signal from a Sensor I 105 mounted in the vicinity of the opening through which waste is fed into the cavity 71, triggered when the level of waste reaches the height of the sensor, control system 100 causes operation of electric motor 103, thence hydraulic pump 104 and so walking floor 73.

The control system further comprises a programmer unit 107, by means of which the period of operation of walking floor 73 can be set. For example, if the container is being filled with heavy, dense paper, the walking floor will be operated, typically in short steps. A lighter, less dense material will typically be moved in larger, and thus less frequent but longer, steps. The duration may be programmed directly by means of a numeric keypad. In the preferred embodiments, the programmer will be pre-programmed with a number of pre-set specific programmes such that, for example, a user has a choice of, perhaps, three selector keys, one of dense material, one for light material and another for mixed material, for instance.

A second sensor, Sensor II 106 detects when the container is full. Alternatively, detection of a "full" status is achieved by programming of the control system 100. By monitoring the position of the headboard 70, the control system 100 can use a single sensor, Sensor I 105, to determine when the container is full, In response, a signal is produced to request the arrival of a tractor unit to remove and replace the trailer. In its simplest arrangement, a communication device 108 in the form of a simple audible and/or visual signal is produced at a suitable location on-site. However, many newsprint sites rely on contractors for removal of waste. Accordingly, in the preferred embodiment, the communication device 108 includes a communications device, such as a modem, programmed to call a remote contractor to request attendance of a tractor unit and replacement of the container.

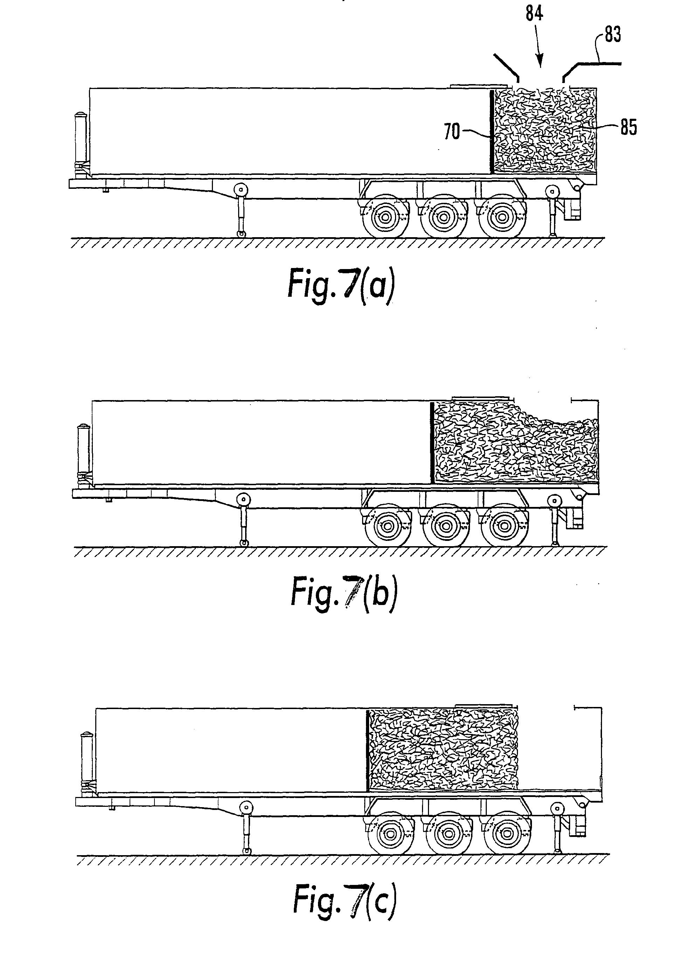

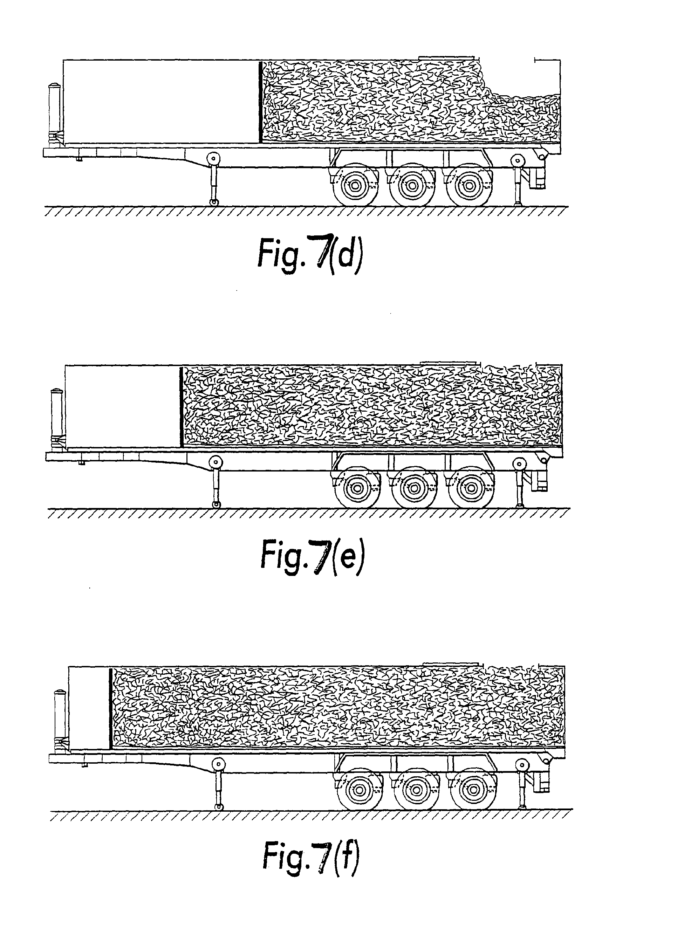

With particular reference to Figures 5 and 7, the process of the present invention will now be explained with reference, by way of example only to a printing works. A lorry comprising a tractor unit 10 and a trailer 11 reverses up to a loading bay 81, of a printing works 82. Newspaper waste is removed from the printing process and delivered along a discharge pathway 83 (which is illustrated only schematically) to a hopper 84. Hopper 84 discharges into a trailer 11, positioned underneath the hopper 84 through open aperture 40 of the hatch in the roof 16 of trailer 11.

In a typical arrangement, however, the printing works 82 will have several hoppers 84 with associated discharge pathways 83, each with a respective trailer 11.

Initially, the transverse headboard 70 will be at the position indicated in Figures 3 and 7a. The hopper 84 discharges waste paper 85 though open aperture 40 into the cavity 71 of the trailer where it falls upon the canvas sheet 72. Being attached to the base of the headboard 70, the weight of waste 85 falling on the canvas sheet 72 acts to prevent the headboard being pushed towards the rear of the trailer as the mass of waste 85 accumulates.

As cavity 71 becomes full, one or more sensors (SENSOR I) mounted about the aperture 40 trigger a control mechanism which causes operation of the power pack, thereby causing actuation of the walking floor 73 for a predetermined duration to move the contents of the cavity 71 towards the rear wall 17 thereby enlarging cavity 71 (Figure 7b). It has been found that with waste paper from a newspaper printing works the weight of the paper is sufficient to compact the mass of waste 85 such that as the mass is advanced towards the rear of the container 13 the mass retains its generally cuboid shape (see Figure 7c). The forward face of the mass 85 does not collapse once it is moved away from contact with the doors 12 of the trailer.

The process is repeated (Figures 7a-e) with the headboard 70 indexing backwardly towards the rear wall 17 of the trailer until the container 13 is substantially full (Figure 7f) which state is sensed by a Sensor II. Typically, this will involve 5 or 6 indexing steps.

The predetermined duration of actuation of the walking is adjustable, for example, having regard to the nature of the material being collected. For example, heavier waste may need advancing more frequently, but by shorter distances.

The hatch is then closed and the trailer is then ready to be collected on the next visit of the lorry delivering newsprint. In order to avoid undue delays, in the preferred embodiment, the control system further includes communication means, suitably a modem, for unattended calling for a tractor unit. This is particularly advantageous where removal of waste is dealt with by a remote contractor rather than the owners of the site. At the site where the waste paper is to be discharged, for example at a landfill site or recycling plant, the trailer discharges the waste by means of the walking floor operating in the reverse direction or by means of tipping the container about pivot point 20 by means of ram 25. During discharging, the canvas sheet 72 attached to the bottom edge of the headboard 70 acts to pull the headboard 70 towards the front of the trailer as the waste is discharged.

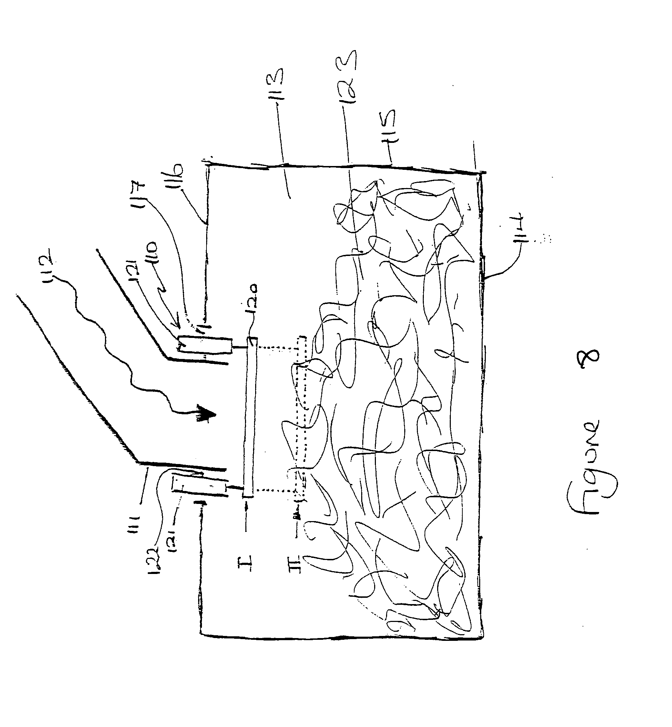

Figure 8 illustrates the application of the system described above to the trailer and system described in our earlier European application, EP 03253734.2 to which further reference should be made. With reference to Figures 8 to 10, that application describes an apparatus 110 in accordance with the present invention mounted upon the outlet chute 111 of a material flow path 112 above a container 113 forming part of a trailer. Container 113 includes a floor 114, four side walls 115 and a roof 116. In the arrangement shown, the roof 116 has an opening 117 therein for receipt of the outlet chute 111.

The apparatus includes a compactor element in the form of a generally rectangular frame 120 mounted upon the rams of a number of pistons 121 each mounted, for convenience, upon the outlet chute 111 by means of brackets 122. The pistons may be pneumatically or hydraulically actuated. Alternatively, the rams may be part of an electrically operated ram assembly. By actuation of the pistons, the frame 120 is moveable between an unextended position illustrated in Figure 8 by solid line I in which the frame is generally adjacent the outlet chute 111, and an extended or deployed position, illustrated by dotted line II, in which the frame contacts a pile of material 123 in the container 113, thereby compressing the material.

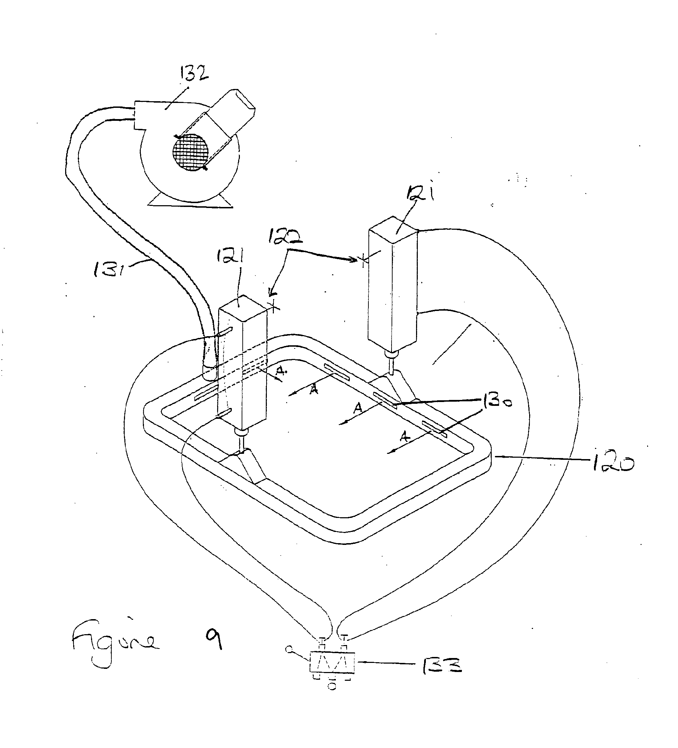

In the embodiment shown, the frame 120 includes a plurality of outlets or nozzles 130 disposed about the inner surface thereof. Frame 120 is operatively coupled through a duct 131 to an air supply, such as a fan blower 132, such that a flow of air (arrows A in Figure 9) is emitted from nozzles 130.

In use, in a typical print room situation, shredded paper passes along chute 111 and falls vertically into container 113. Typically, the paper is caused to pass along chute 111 by an air-blowing system. Such systems are well known in the art. The flows (A) of air from frame 120 ensure that the finely divided paper is more evenly distributed about the container 113 than would otherwise be the case. Finely divided paper does not naturally form a dense mass. As the paper mounts up in the container, the pistons 121 are actuated to extend the frame 120 downwardly onto the paper thereby compressing it. Typically, the apparatus includes a control assembly 133 to actuate the frame extension on a periodic basis, suitably every 110 seconds or so. In the preferred arrangement, the control assembly 133 also includes a manual actuation facility, such that an operator can actuate the frame extension on a manual basis.

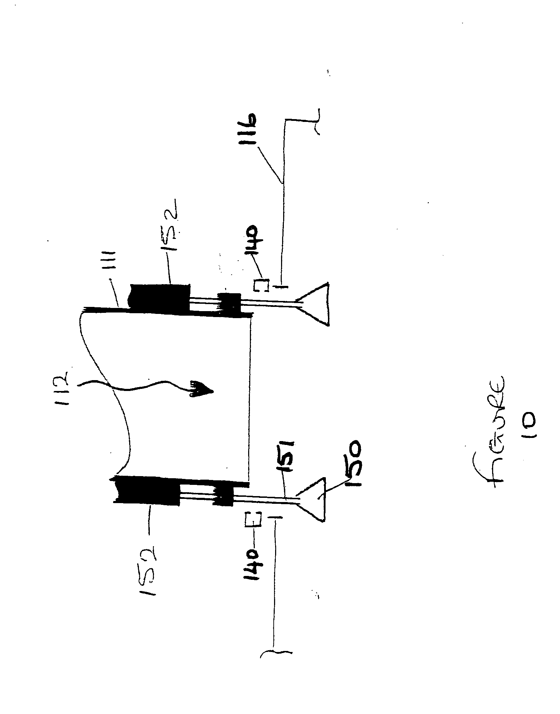

In the alternative embodiment illustrated in Figure 10, the flow of air is provided by a separate air-flow element 140. In the arrangement shown, the air-flow element 140 is mounted such that it can be position above the aperture 117 in the roof 116 of the container 113. Equally, the air-flow element may be mounted such that it can be positioned just inside the roof aperture 117. Indeed, the air-flow element may be mounted within the container 113. The rams are typically pneumatically driven, but hydraulic or electrical operation is equally suitable.

In this embodiment, frame 120 is replaced by a matrix of discrete compactor feet 150, typically in a generally square or rectangular 3x2 matrix of two feet in each of three rows, although other arrangements are equally suitable. In the embodiment shown, each foot 150 is generally pyramidal in shape with a square base. Each foot is mounted on the lower end of a ram 151, driven hydraulically, pneumatically or by other suitable means 152.

In each embodiment, preferably the pistons 121 or rams 151 are in operative connection with a force-feedback system comprising sensors to monitor the "back-force" exerted by the material within the container 113 upon the frame 120 or feet 150. When the back-force exceeds a predetermined level, indicating that the capacity of the filling area has been met, the feedback system alerts the user that the capacity has been met so that they may operate the walking floor, or, in the preferred embodiment using a trailer having a walking-floor and headboard arrangement as described in our European application EP-A-01 120 363, causes unattended advancement of the walking-floor to form a "new" cavity. These sensors constitute Sensor I 105 described above.

## Claims

1. A trailer for an articulated lorry, the trailer comprising an enclosed elongate material-carrying container adapted for receipt of a flow of material, the container having a walking floor, a rear wall and two side walls and a front access door, wherein the trailer is **characterised in that** it further comprises a control system including actuating means for the walking floor, the actuating means comprising sensing means adapted to sense when contents within the container reach a predetermined condition and outputting a signal in response thereto, and powering means causing operation of the walking floor for a predetermined period in response to the signal from said sensing means, to advance the contents towards the rear of the container.

2. A trailer as claimed in Claim 1 wherein the powering means comprises an electrically powered pump, suitably a hydraulic or pneumatic pump.

3. A trailer as claimed in Claim 1 or Claim 2 where the predetermined period of operation of the walking floor is dependent upon the nature of the contents of the container and is suitably controlled by means of a computer.

4. A trailer as claimed in any one of claims 1 to 3 wherein the trailer further includes an internal moveable wall or headboard which is advanceable between a position adjacent the access door in which the capacity of the container is at a minimum and a position remote the access door in which the capacity of the container is at a maximum.

5. A trailer as claimed in any one of claims 1 to 4 wherein the interior surfaces of the walls and roof are substantially flat and un-interrupted.

6. A trailer as claimed in any preceding claim wherein the trailer includes a door, suitably a sliding door, in the roof of the vehicle.

7. A trailer as claimed in any preceding claim wherein the sensing means are provided on one or more internal walls of the trailer.

8. A waste collection system for a premises, the system comprising (i) providing a trailer as claimed in any one of claims 1 to 6; (ii) providing the premises with a waste collection bay including waste material expulsion means for expulsion of waste material into said trailer; the system further comprising means for sensing when the container is full and issuing a signal in response thereto; the system yet further comprising means for calling for an articulated lorry tractor unit to remove the trailer in response to said signal.

9. A system as claimed in Claim 8 wherein the waste material expulsion means comprises means to provide a flow of air towards, in use, a flow of the material into the container; and a compactor element adapted for positioning above the floor of the container and being adapted to move generally vertically between an un-extended position and an extended position in which the compactor element is closer to the floor of the container.

10. A system as claimed in Claim 8 or Claim 9 wherein the compactor element is in the form of a frame and the sensing means is mounted upon or within the frame.

11. A system as claimed in Claim 8 or Claim 9 wherein the compactor element is in the form of a plurality of individual compactor feet and is adapted to reciprocate between the first and second positions by means of a piston or ram assembly, and the sensing means comprises feed-back sensors mounted on the piston or ram assembly.
